(19) Europäisches Patentamt
European Patent Office
Office européen des brevets

(11) Publication number: **0 191 677**
**A2**

(12) # EUROPEAN PATENT APPLICATION

(21) Application number: **86400152.4**

(22) Date of filing: **24.01.86**

(51) Int. Cl.⁴: **C 04 B 28/34**, C 04 B 35/66
// (C04B28/34, 14:04, 20:04)

(30) Priority: **24.01.85 CA 472798**

(43) Date of publication of application: **20.08.86**
**Bulletin 86/34**

(84) Designated Contracting States: **AT NL SE**

(71) Applicant: **CERAM-SNA INC., 850 West, Ouellet Boulevard, Thetford-Mines Quebec G6G 5S5 (CA)**

(72) Inventor: **Lalancette, Jean-Marc, 470 Duvernay Street, Sherbrooke Quebec (CA)**
Inventor: **Desrosiers, Luc, 852 Francheville Street, Rock Forest Quebec (CA)**
Inventor: **Gouin, Marcel, 352 Hebert Street, Deauville Quebec (CA)**

(74) Representative: **Gutmann, Ernest et al, S.C. Ernest Gutmann - Yves Plasseraud 67, boulevard Haussmann, F-75008 Paris (FR)**

(54) **Phosphate bonded materials.**

(57) There is provided a shaped three-dimensional calcined phosphate-bonded magnesium silicate comprising the shaped reaction product of phosphoric acid with a natural magnesium silicate selected from uncalcined magnesium silicate and magnesium silicate tailings which have been calcined at a temperature of from 800 to 1300°C, provided that the reaction product of phosphoric acid with uncalcined magnesium silicate has been calcined at a temperature of from 800 to 1100°C while shaping, the selected magnesium silicate having an aspect ratio $\frac{\ell}{d} < 500$ wherein $\ell$ is the average length and d is the average diameter of the selected natural magnesium silicate particle. The products are useful as insulating products, firewall and casting products and dielectric products depending on the amount of each starting material used and are furhter characterized by being asbestos-free.

EP 0 191 677 A2

# PHOSPHATE BONDED MATERIALS

## BACKGROUND OF THE INVENTION

The bonding of natural hydrated silicates of magnesium with phosphoric acid is well known, such natural hydrated magnesium silicate being found in the form of asbestos, talc and other minerals. Several patents deal with the bonding of asbestos fibers with phosphoric acid or phosphates from various sources. Streib et al (US Patent #3 383 230) have shown that phosphoric acid adsorbed over calcium silicate could be used to bind asbestos fibers in order to give sheets or boards. Similar results have been reported by Brink et al (US Patent #2 366 485). In this case, the acid is reacted directly with chrysotile asbestos fibers without prior adsorption over an inert filler as in the process of Streib. Several inert fillers such as kieselguhr and oxides are reported for the compounding of asbestos fibers with phosphoric acid by Ohman (US Patent #1 435 416). Greider et al (US Patent #2 567 559) report the binding of mixtures of asbestos-containing fibers with phosphated binders, either phosphoric acid or ammonium phosphates or water soluble phosphates. Insulating boards are obtained by Spooner et al (US Patent #2 804 908) by heating mixtures of either phosphoric acid or aluminum phosphate with asbestos fibers. Finally, Abolins et al (US Patent #2 804 038) and Denning (US Patent #2 538 236) report thermosetting mixtures where the phosphoric acid is adsorbed over

diatomaceous earth before being blended with chrysotile asbestos fibers.

In the patents cited above, thermal treatments of various intensity, form 100°C to 1000°C, have been reported being applied to the mixture of asbestos fibers and phosphating agent in order to complete the reaction.

It has been alledged however that handling of asbestos fibers can be detrimental to health. Rather complex dust emission regulations have rendered the use of asbestos-containing products less attractive. In order to circumvent these drawbacks resulting from the use of raw asbestos fibers, the reactions of magnesium silicate obtained from the calcination of either asbestos or serpentine, with phosphoric acid have been examined. The results obtained have been extended to other magnesium silicates such as olivine and talc.

The calcination of serpentine ($3MgO.2SiO_2.2H_2O$) is accompanied by the removal of two molecules of water of hydration:

$$3MgO.2SiO_2.2H_2O \xrightarrow{800^{\circ}C} 3MgO.2SiO_2 + 2H_2O$$

The resulting magnesium product is either forsterite and silica or forsterite and enstatite, depending on the temperature used in the calcining process.

$$2\,[3MgO.2SiO_2] \xrightarrow{800^{o}-1200^{o}C} 3\,[2MgO.SiO_2] + SiO_2$$

Forsterite + silica

$$[2MgO.SiO_2] + SiO_2 \xrightarrow{1200^{o}-1300^{o}C} 2\,[MgO.SiO_2]$$

Enstatite

On the other hand it is well known that heating asbestos fibers affects not only its strength but also other physical (mechanical) properties while the chemical characteristics are also altered by temperature increases (see Hans Berger, Asbestos Fundamentals, p. 94, Chemical Publishing Co.). This is substantiated by Figure 1 of U.S.P. 2,804,908. Even if fibers are bonded with phosphate ions it is seen from Fig. 1 of U.S.P. 2,804,908 that the power factor of phosphate treated asbestos decreases as it is submitted to heat treatments from 400 to 1100$^{o}$C, while that of commercial untreated asbestos fibers, although at all times lower than that of phosphated fibers, decreases when submitted to temperature increases.

It is believed that this can be explained by the following observations. It is known that asbestos fibers are monodirectional having a very high aspect ratio ($\ell$/d). When heated, the fiber is internally weakened into smaller units still linked together but the overall tensile strength of the heated fiber is substantially less than the initial fiber itself. This is illustrated in Figure 1 of the present application where

the arrows show the point of weakness of asbestos fibers dehydrated at over 800°C.

On the other hand, if asbestos fibers 10 are reacted with phosphoric acid there is obtained a bidimensional product 14, shown in Figure 2, which upon heat treatment at 800°C or more to cause dehydration will yield a product 16 where the internally weakened fibers are linked by phosphate units. Though the phosphated fiber in its physical appearance appears to be structurally sound, its weakness become evident when it is submitted to tensile strength test or effort.

In other words, because the space occupied by the length of the fibers, the phosphate groups form bonds along two axes (x and y only), the third axis (z) being occupied by the fiber itself. This is illustrated in Figure 2.

It can be argued that because of random orientation of asbestos fibers in reaction mixtures, the weakening along a given axis will not be noticed. In practice however, independently of the orientation of one given fiber, the tensile forces applied on it and its reaction can always be decomposed into three vectors which coincide with orthogonal axis. It can therefore be readily understood that the effect of random orientation, if the asbestos fiber is weakened by thermal treatment, will be a mechanically weaker product along all three axis.

Accordingly, it would be highly desirable if natural silicates could be bonded with phosphoric acid to form a product having unexpected higher strength than fibrous natural silicates bonded with phosphoric acid by providing bonding along all three axes (x, y and z) and which will retain its tensile strength after being submitted to thermal treatment.

SUMMARY OF THE INVENTION

In accordance with the present invention it has unexpectedly been found that when natural magnesium silicates in the shape of granules or particles are phosphate bonded there is obtained a product which can be shaped under pressure to form a shaped product having highly desirable and unexpected insulating and mechanical properties, superior to those obtained by phosphate bonding of highly fibrous magnesium silicates.

In one of its aspects, the present invention provides a shaped asbestos-free three-dimensional calcined phosphate-bonded natural magnesium silicate having an aspect ratio $\frac{\ell}{d} \leqslant 500$ where $\ell$ is the average length and d is the average diameter of the natural magnesium silicate particles.

Generally, the products of the present invention comprise the shaped reaction product of a mixture of from 5 to 50% by weight of phosphoric acid, 0 to 80% by weight of an inert filler and 5 to 95% by weight of a natural magnesium silicate having an aspect

ratio $\frac{\ell}{d} \leqslant 500$.

In one aspect of the invention, the starting natural magnesium silicate in the shape of granules or particles is calcined at a temperature of from 800 to 1300°C before its reaction with phosphoric acid. It is also possible to start with uncalcined natural magnesium silicates and the reaction product of the latter with phosphoric acid is calcined at a temperature of from 800 to 1100°C subsequent to shaping.

More specifically, the present invention provides a shaped asbestos-free three-dimensional calcined phosphate-bonded natural magnesium silicate comprising the shaped reaction product of phosphoric acid with a natural magnesium silicate having an aspect ratio $\frac{\ell}{d} \leqslant 500$, wherein $\ell$ is the average length and d is the average diameter of the natural magnesium silicate particles.

The natural magnesium silicate particles are selected from the group consisting of uncalcined magnesium silicates and natural magnesium silicates which have been calcined at a temperature of from 800 to 1300$^{o}$C with the proviso that the reaction product of phosphoric acid with uncalcined natural magnesium silicates have been calcined at a temperature of from 800 to 1100$^{o}$C after shaping.

The product of the present invention may also contain an inert filler to retard the setting of the reaction mixture before the shaping step and also to provide the possibility of controlling the density and flexural strength and thus the use of the final shaped product.

DETAILED DESCRIPTION

Generally speaking, the shaped product of the present invention consists of a mixture of 5 to 50% by weight of phosphoric acid, 0 to 80% by weight of inert filler and 5 to 80% by weight of natural magnesium silicate having an aspect ratio $\frac{\ell}{d} \leqslant 500$.

The term "phosphoric acid" when used herein is intended to include not only phosphoric acid but also water-soluble inorganic phosphates thereof which upon heating provide phosphate ions such as sodium or potassium acid pyrophosphate, ammonium phosphate (mono-, di- or tribasic) and similar inorganic phosphates.

The term "natural magnesium silicate having an aspect ratio $\frac{\ell}{d} \leqslant 500$" when used herein is intended to cover those natural magnesium silicates wherein the MgO content is from 25 to 60% by weight. As an example of suitable natural magnesium silicates used herein, there may be mentioned tailings or residues of asbestos fibers of serpentinic origin, for example, short chrysotile asbestos fibers or tailings, brucitic serpentine, olivine or talc and the like which also contain a certain amount of asbestos fibers, either in granular form having a granulometry of from +30 to -400 mesh (Tyler) or floats (very short asbestos fibers, average $\frac{\ell}{d} \leqslant 500$) in the case of asbestos residues, and the products themselves when olivine or talc are selected.

In the case of olivine and talc, depending on their sources, these products do contain significant amounts of undesirable short asbestos fibers which disappear by the use of the invention.

INERT FILLER

The two main purposes of the inert filler are the control of the speed or reaction of the phosphoric acid with the magnesium silicate and the adjustment of the density of the shaped product to the desired value. The inertness towards phosphoric acid does not have to be total. What is required is a reactivity rather slower than the reactivity of the magnesium silicate towards phosphoric acid. As an example of suitable

inert fillers there may be mentioned vermiculite, rock wool, rock wool derived from serpentine, fiberglass, perlite, diatomaceous silica. The loose density of a suitable inert filler varies between 80 and 600 $kg/m^3$.

THE DRAWINGS

In the drawings:

Figure 1 illustrates the change of structure of an asbestos fiber after dehydration,

Figure 2 illustrates the change of structure of a phosphated asbestos fiber after dehydration or calcination, and

Figure 3 illustrates the structures of phosphated asbestos residues and of calcined phosphated asbestos fibers along with the structure of calcined residues and calcined phosphated asbestos residues.

TYPES OF PRODUCTS

The present invention is particularly suitable for the preparation of three broad types of products, namely, insulating products, marinite-like products and high density products where the different variables will have to be adjusted accordingly.

INSULATING PRODUCTS

With insulating products, a low density is required since it is well known that the insulating performances are directly related to the light specific weight of the insulating material. Therefore, formulations calling for a high percentage of inert expanded

filler, in the range of 40 to 80 per cent by weight is used. Since a rather large amount of inert filler is present, it is necessary to use a significant amount of phosphoric acid, because of the high adsorbing power of the inert filler. The amount of phosphoric acid will vary in the range of 10 to 30% by weight. The natural magnesium silicate used represent from 10 to 30% by weight of the reaction mixture.

The pressure used for cold forming will be small, in the range of 10 to 20 kg/$cm^2$ and the density of the resulting product will be in the range of 250 to 500 kg/$m^3$. Such products can act as isolators equivalent to calcium silicate which has a density in the range of 300 kg/$m^3$.

Because of the presence of the high percentage of inert filler, the mechanical strength of such light density shaped material is low, giving flexural strength of the order of 20-50 kg/$cm^2$. The ratio of magnesium silicate to phosphoric acid is in the range of 3.0 to 0.33, with preferred values of about 1.0. Such a ratio can give high strength but the large amount of filler required to lower density weakens the structure.

FIREWALL AND CASTING PRODUCTS

With marinite-type products, the density is in the range of 500 to 1000 $kg/m^3$. Such products are currently used as firewalls in ships (explaining the name) and for casting non ferrous metals such as aluminum.

With this type of formulations, the amount of inert filler is substantially decreased. Therefore, the phosphoric acid is more efficient in reacting with magnesium silicate and the resulting product stronger. The range for inert filler is 25 to 50% by weight, with 15 to 35% by weight of phosphoric acid and 30 to 60% by weight of magnesium silicate. The ratio of magnesium silicate should be kept above 1.0 and substantial mechanical properties such as flexural strength in the range of 40-100 $kg/cm^2$ are obtained with ratio between 1.0 and 3.0. The cold forming of the green mass here again can be done at low pressure, in the range of 10 to 20 $kg/cm^2$.

DIELECTRIC INSULATING PRODUCTS

With high density products, a minimum amount of inert filler will vary from 0 to 25% by weight. The ratio of magnesium silicate to phosphoric acid must not be too high. A preferred ratio is 1.0 with limits extending from 4.0 to 0.5. When no inert filler is used, the amount of phosphoric acid will vary from 20 to 50% by weight and the amount of natural magnesium silicate will vary from 80 to 50% by weight. On the other

hand, when a filler is used in an amount of up to 25% by weight, the amount of phosphoric acid will be from 20 to 50% by weight while the amount of natural magnesium silicate will be in the range of from 80 to 25% by weight. Under ideal conditions, a flexural strength of 100 to 300 $kg/cm^2$ is obtained. The density can vary from 1000 to 2300 $kg/m^3$. The pressure used for the shaping of the samples must be much higher than those used for the shaping of insulating formulations or marinite-like formulations. In practice, pressures in the range of 70 to 300 $kg/cm^2$ can be used with preferred values around 150 $kg/cm^2$. The high density products of the present invention are particularly useful in products having a desirable degree of dielectric insulation and good mechanical properties.

SHAPE OF PHOSPHATE BONDED MAGNESIUM SILICATE PARTICLES

The ℓ/d ratio of the magnesium silicate particles can be evaluated by electron microscopy. For standard long asbestos grades, such as for example a grade 4 fiber, on a weight basis, there is 70% of fiber with ℓ/d ratio of 10,000 and 30% of grit with a ℓ/d of around one, which gives an average ℓ/d ratio of 7000.

For very short asbestos grades, such as grade 7 or floats, on a weight basis, one finds at least 50% grit with a ℓ/d ratio of around one and at most 50% of short fibers, with a ℓ/d ratio of 1000, giving an average value of 500.

With olivine, the particules are near spherical, corresponding to a ℓ/d ratio of around one. The situation is similar with talc.

## EXAMPLES

The following Examples illustrate the preparation of the products and their physical properties.

## EXAMPLE 1

Relation effect of shape of magnesium silicate particulate on the resulting bonded product

This series of examples demonstrates that the shape, either long, short or non fibrous has a determining effect on the mechanical properties of the end product. In order to differentiate between effects due solely to the shape of the magnesium silicate particle, the binding phosphoric acid has been added without prior adsorption over an inert filler. Rather, dilution of the acid with water was used in order to have a green mixture that could be molded. It is to be noted that such a formulation is far from ideal to maximize the mechanical performances. But such an arrangement was unavoidable since with concentrated acid, fiber tends to set immediately, preventing any shaping at all.

The general procedure followed was to mix the magnesium silicate (150 g) with diluted phosphoric acid, compress in a mold at 3000 psi, at 140-145$^{o}$C for five minutes with frequent venting, and cured thermally at a rate of temperature increase of 50$^{o}$C/30 minutes, up to

800$^{\circ}$C. The temperature was then kept at 800$^{\circ}$C for one hour. Flexural strength and density were determined on different samples. When using a magnesium silicate which is already calcined, no curing of the shaped product is required.

| EX. N° | MAGNESIUM SILICATE | CONCENTRATION OF $H_3PO_4$ (%) | RATIO Mg SILICATE/ $H_3PO_4$ | FLEXURAL STRENGTH ($kg/cm^2$) | DENSITY ($kg/m^3$) | ASPECT RATIO ℓ/d |
|---|---|---|---|---|---|---|
| 1.1 | CALCINED TAILINGS (1200°C), -400 M. BELL MINES | 85 | 2.33 | 148 | 2320 | < 10 |
| 1.2 | LONG ASBESTOS FIBER, GRADE 4T500, BELL MINES | 85 | 2.33 | 113 | 1750 | 7-10,000 |
| 1.3 | CALCINED TAILINGS (1200°C), -400 M. BELL MINES | 85 | 5.6 | 97 | 2180 | < 10 |
| 1.4 | LONG ASBESTOS FIBER, GRADE 4T500, BELL MINES | 85 | 5.6 | In homogeneous No aggregation No mechanical strength | | 7-10,000 |
| 1.5 | SHORT ASBESTOS FIBER, 7R750-F BELL MINES | 85 | 5.6 | 33 | | < 500 |

It can be readily noted by comparison of Examples 1.1 and 1.2 the substantial differences in flexural strength between a calcined tailing, non fibrous, and long asbestos fibers. This effect is even more important if the amount of binding phosphoric acid is decreased (Examples 1.3, 1.4, 1.5).

If the ratio of magnesium silicate to phosphoric acid is increased to from 2.33 to 5.6, then, the long fibers (Example 1.4) are no longer bonded and the short fibers (Example 1.5) give a very weak product when compared to non fibrous material (Example 1.3). For a given amount of binding agent the strength of the resulting product will be maximized by the absence of highly fibrous material (long fibers).

EXAMPLE 2

In order to have good control over the setting properties of the acid it has been found useful to absorb the phosphoric acid over an inert filler. Then, the life of the green mixture was of the order of one hour and a marinite-like product obtained.

In a typical formulation a 60% phosphoric acid (50 g) is absorbed over 85 g of vermiculite (density: 111 $kg/m^3$) Zonolite® TM no. 3. This absorbed acid is cold mixed with 85 g of floats (dust from asbestos milling, Bell Mines - 200 mesh Tyler, average ℓ/d < 500) in order to obtain a homogeneous mixture. The ratio of magnesium silicate over $H_3PO_4$ was then 2.8. This mixture

is placed in a mold 10 cm x 10 cm and a pressure of 20 $kg/cm^2$ during 15 seconds at 150°C. The shaped product is then transferred and heated at 150°C in a microwave oven for a period of 10 minutes. Finally, the product is heated at 800°C for one hour. The density is the 900 $kg/m^3$ and the flexural strength is 50 $kg/cm^2$. This product is particularly well adapted for aluminum casting industry where it acts as a floating component for the transfer of the molten aluminum metal into the mold.

EXAMPLE 3

A procedure similar to Example 2 was used except that the magnesium silicate was Bell Mines tailings (- 100 + 200 mesh Tyler, average $\ell/d < 50$) calcined at 1300°C. The flexural strength was then 42 $kg/cm^2$ and the density 850 $kg/m^3$.

EXAMPLE 4

In a different experiment, floats from Bell Mines (48%, - 40 + 70 mesh; 17%, - 70 + 200 mesh; 34%, - 200 mesh, Tyler, average $\ell/d < 500$) were calcined. This material (100 g) was cold mixed with 85% phosphoric acid (51 g). This mixture corresponds to a 2.33 ratio of magnesium silicate over acid. No inert filler was used for the acid. The green mixture was placed in a 10 cm x 10 cm mold and compressed at 210 $kg/cm^2$ for five minutes at 140°C. Since the starting tailings had been cured at 1000°C, the 800°C curing could be dispensed with and a maturing treatment at 150°C in a microwave

oven for 15 minutes gave a product with a flexural strength of 130 $kg/cm^2$. The density of the shaped product was 1950 $kg/m^3$, showing this product as a high density formulation. This product is used as backing in the manufacture of electrical panels.

EXAMPLE 5

The following example shows that a very small amount of binding phosphate can be used, under appropriate conditions to give a shaped product of acceptable mechanical performances. Bell Mines tailings were used and had the following granulometry: 63%, - 40 + 70 mesh; 28%, - 70 + 200; 9%, - 200 mesh, Tyler, average $\ell/d < 50$. A 180 g sample of this material was treated at room temperature with 20 g of 85% phosphoric acid, corresponding to a 10.6 ratio of magnesium silicate over phosphoric acid. The molding technique was similar to Example 2 and was followed by a thermal treatment at 800°C for one hour. The flexural strength then observed was 74 $kg/cm^2$ and the density 1800 $kg/m^3$. This product is useful as an insulator or in firewall doors or panels.

EXAMPLE 6

If low density material is desired, a relatively large proportion of the inert filler can be used as shown by the following examples. A 20 g sample of Bell Mines floats ( - 200 mesh Tyler, average $\ell/d < 500$) was tested 20 g of 85% phosphoric acid previously absorbed over 60 g of Zonolite® TM no. 3. The ratio of

magnesium silicate over phosphoric acid was then 1.18 and the percentage of inert filler in the green mix was 62%. The mixture was then treated as in Example 2 and the observed flexural strength was 64 $kg/cm^2$. The density was 910 $kg/m^3$. This product is useful for insulating steam pipes.

Other magnesium silicate can be used with advantage, besides serpentine material, as shown by the following examples. It is to be noted that such magnesium silicates are substantially devoid of fibrous components.

EXAMPLE 7

Olivine is a magnesium-iron silicate (MgFe) $SiO_4$ containing 4 - 6% Fe. A finely ground sample of olivine (6%, - 40 + 70 mesh; 90% - 70 + 200 mesh; 4%, - 200 mesh, Tyler, average $\ell/d \cong 1$), 180 g was reacted with 20 g of 85% phosphoric acid at room temperature, to give a green mix with a 10.6 ratio of magnesium silicate over phosphoric acid. The shaping was done as in Example 2 and the flexural strength of the shaped product was 42.6 $kg/cm^2$, with a density 2100 $kg/m^3$.

EXAMPLE 8

Talc, average $\ell/d \cong 1$, is a hydrated magnesium silicate having the following formulation $Mg_3Si_4O_{10}(OH)_2$. It was calcined at 800$^oC$ for one hour prior to reaction. A 140 g sample of calcined talc (95% - 325 mesh, Tyler) was treated at room temperature with 60 g of 85% phos-

phoric acid. The molding was then done as in Example 2 and the observed flexural strength was 89 kg/cm$^2$, with a density of 1850 kg/m$^3$. The high density of this product makes it useful in the manufacture of arc-chutes used in high voltage circuits.

The following example illustrates the formulation of an insulating product characterized by its low density.

EXAMPLE 9

The starting material was float tailings from Carey Mines (80% - 150 + 200 mesh, 20% - 200 mesh, Tyler, average $\ell/d \leqslant 500$). A 18 g sample of this magnesium silicate was cold mixed with 18 g of $H_3PO_4$, 85% previously mixed with 64 g of inert filler (Zonolite®). The cold mix was then shaped under very low pressure of 1 kg/cm$^2$. After a microwave heating at 150°C for ten minutes, the product was cured at 800°C for one hour. The flexural strength observed was then 6 kg/cm$^2$ and the density 300 kg/m$^3$. This product is particularly suitable for use as an insulating product and as a backing in the manufacture of electrical panels.

WE CLAIM:

1. A shaped three-dimensional calcined phosphate-bonded magnesium silicate comprising the shaped reaction product of phosphoric acid with a natural magnesium silicate selected from uncalcined magnesium silicate and magnesium silicate which have been calcined at a temperature of from 800 to 1300°C, provided that the reaction product of phosphoric acid with uncalcined magnesium silicate has been calcined at a temperature of from 800 to 1100°C while shaping, the selected magnesium silicate having an aspect rate $\frac{\ell}{d} \leq$ 500 wherein $\ell$ is the average length and d is the average diameter of the selected natural magnesium silicate particles and the shaped product being characterized by being asbestos-free.

2. The product of Claim 1, wherein the shaped reaction product comprises from 5 to 50% by weight of phosphoric acid, 0 to 80% by weight of an inert filler and 5 to 95% by weight of a natural magnesium silicate having an aspect ratio $\frac{\ell}{d} \leq$ 500 wherein $\ell$ is the average length and d is the average diameter of the natural magnesium silicate particles.

3. The heat shaped product of Claim 2, wherein the starting natural magnesium silicate has been calcined at a temperature of from 800 to 1300°C prior to

incorporation in the shaped product whereby the shaped product is asbestos-free.

4. The heat shaped product of Claim 2, wherein the starting natural magnesium silicate is uncalcined magnesium silicate and the reaction product after being shaped is cured at a temperature of from 800 to 1100°C whereby the shaped product is asbestos-free.

5. The product of Claim 1, wherein the inert filler is from 40 to 80% by weight, the phosphoric acid is from 10 to 30% by weight and the natural magnesium silicate is from 10 to 30% by weight and the shaped product has a density of 250 to 500 $kg/m^3$ and a flexural strength of from 25 to 50 $kg/cm^2$.

6. The product of Claim 1, wherein the inert filler is from 25 to 50% by weight, the phosphoric acid is from 15 to 35% by weight and the natural magnesium silicate is from 30 to 60% by weight and the shaped product has a density of 500 to 1000 $kg/m^3$ and a flexural strength of from 40 to 100 $kg/m^2$.

7. The product of Claim 1, wherein the phosphoric acid is from 20 to 50% by weight and the natural magnesium silicate is from 50 to 80% by weight and the shaped product has a density of 1000 to 2300 $kg/m^3$ and a flexural strength of from 100 to 300 $kg/cm^2$.

8. The product of Claim 1, wherein the inert filler is in an amount of up to 25% by weight, the phosphoric acid is from 20 to 50% by weight and the natural magnesium silicate is asbestos floats or tailings and is from 80 to 25% by weight and the shaped product has a density of from 800 to 2300 $kg/m^3$ and the flexural strength of from 75 to 300 $kg/cm^2$.

0191677

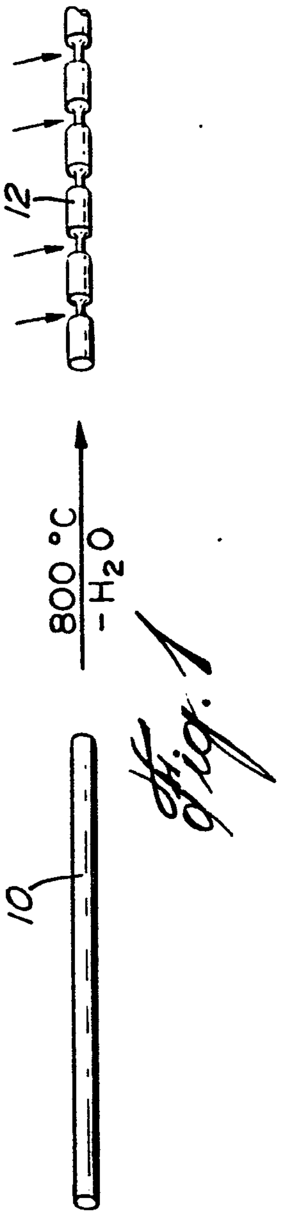


Fig. 1

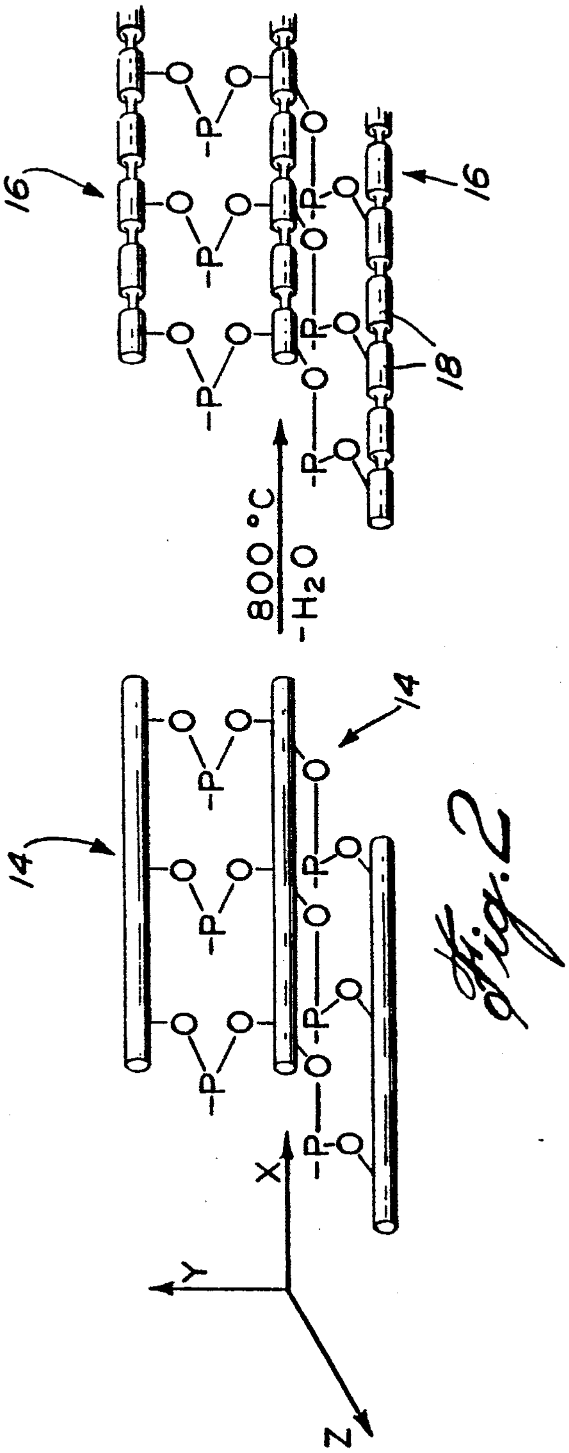


Fig. 2

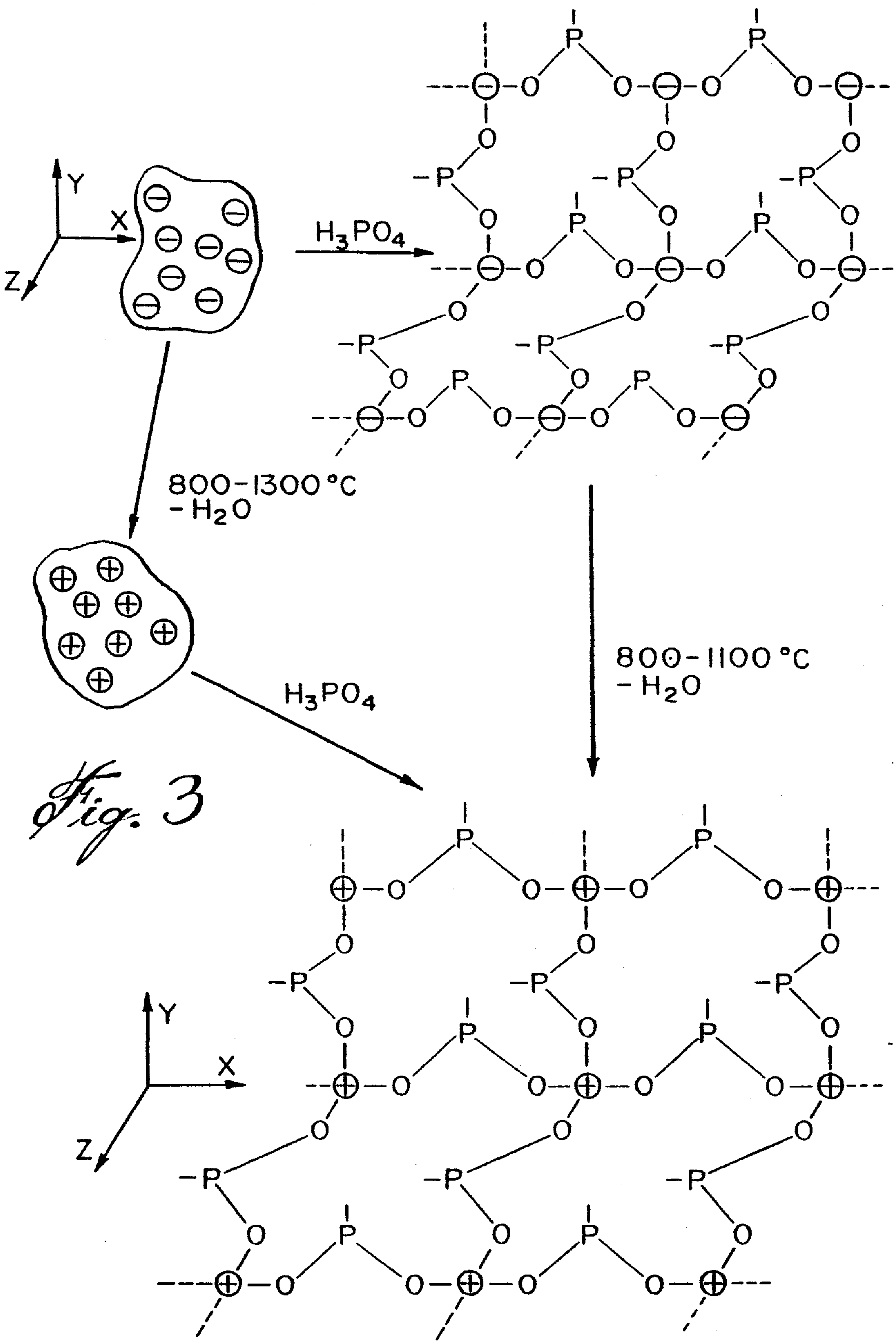


Fig. 3

⊖: NON-CALCINED PARTICULES

⊕: CALCINED PARTICULES